# EUROPEAN PATENT SPECIFICATION

(11) **EP 1 120 184 B1**
(45) Date of publication and mention of the grant of the patent: **28.12.2005**
(21) Application number: 01200273.9
(22) Date of filing: 25.01.2001
(51) Int. Cl.: B23K 7/10

(54) **Apparatus for cutting an object with a cutting means**
Schneidvorrichtung zum Schneiden eines Werkstückes
Appareil de découpe d'un objet

(30) Priority: 26.01.2000 NL 1014190
(43) Date of publication of application: 01.08.2001
(73) Proprietor: Alka Holland Holding B.V., 1775 BA Middenmeer (NL)
(72) Inventor: Glijnis, Pieter Cornelis, 1775 BP Middenmeer (NL)
(74) Representative: Metman, Karel Johannes

(56) References cited:
- DE-C- 3 801 280
- DE-U- 29 508 722
- US-A- 4 899 993
- US-A- 5 782 445

## Description

The invention relates to an apparatus for cutting an object by means of a cutting means in accordance with the preamble of claim 1.

An apparatus of this kind is known, for example from NL-C-1000205. In this prior art apparatus the arm is provided with an auxiliary guide near its upper end. Said auxiliary guide consists of a cross guide, which ensures that the arm will retain a position parallel to itself at all times. Said cross guide is relatively complicated and not very stable, for example due to temperature differences.

The object of the invention is to provide a new apparatus of the kind referred to in the introduction.

In order to accomplish that objective and in accordance with one aspect of the invention, the apparatus is characterized by the features defined in the characterizing portion of claim 1. Preferred embodiments of the apparatus constitute the subject matter of the dependent claims.

According to the invention, a robust, stable and reliable apparatus is provided in a very simple manner, which apparatus is easy to assemble and disassemble. The apparatus exhibits an excellent dynamic behaviour and is easy to adjust. The apparatus according to the invention is less affected by the heating and cooling effects produced by the cutting means. Furthermore, the apparatus according to the invention can be designed as a very compact unit, which is advantageous, for example because the cutting means can be positioned closer to the clamping element, such as a jaw when a tube is to be cut, so that less material will be lost.

The invention will now be explained in more detail with reference to the drawings, which schematically show an exemplary embodiment of the apparatus according to the invention.

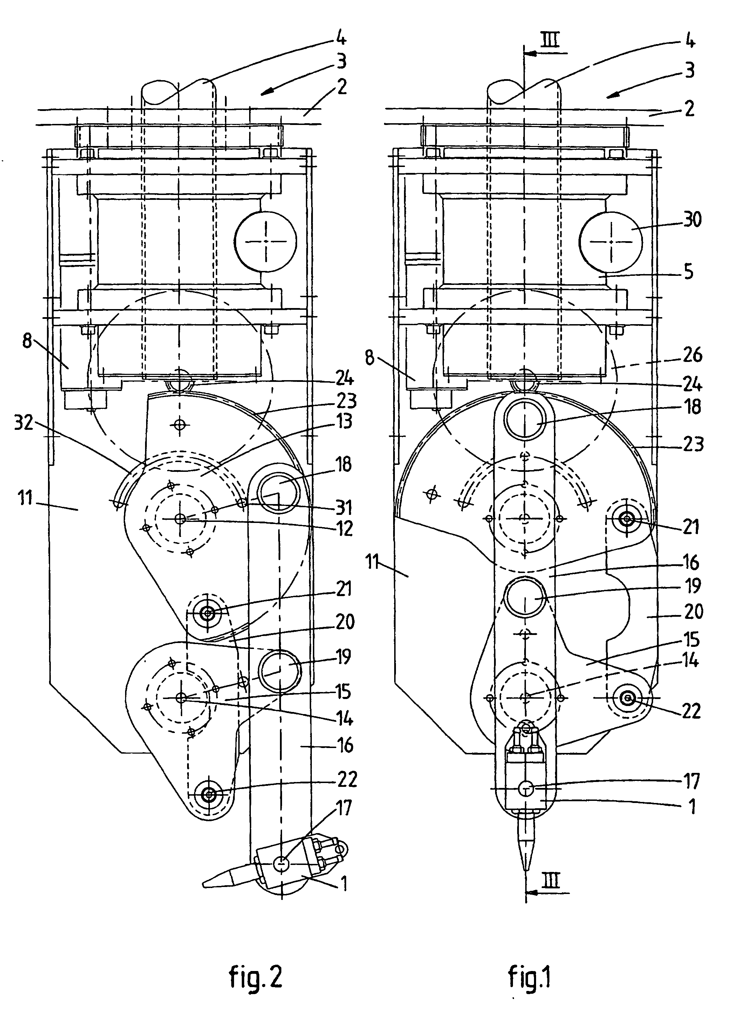

Fig. 1 is a front view of the apparatus according to the invention.
Fig. 2 is a view corresponding to Fig. 1, wherein the apparatus is shown in another position thereof.

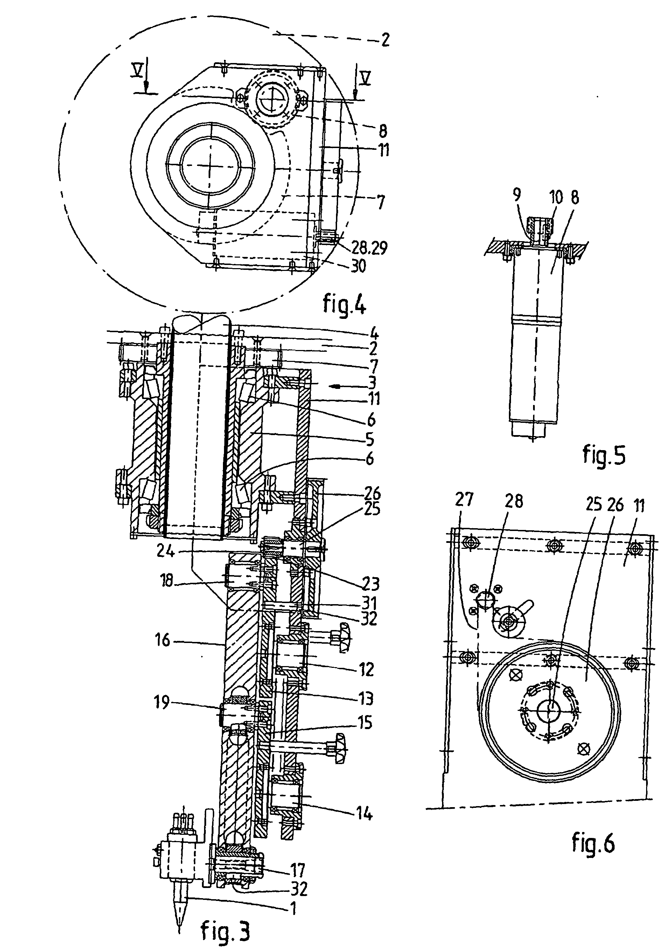

Fig. 3 is a sectional view along line III-III in Fig. 1.
Fig. 4 is a top plan view of the apparatus that is shown in Fig. 1.
Fig. 5 is a sectional view along line V-V in Fig. 4.
Fig. 6 is a partial rear view of the apparatus of Fig. 1.

The drawings show an apparatus that is intended for cutting an object, in particular a metal tube, for example large-diameter steel tubes for frame structures. It is also possible, however, to cut plates or the like objects that have a different shape. The apparatus includes a cutting means or cutting head 1, which may for example consist of a plasma burner, an autogenous cutter, a laser cutter, a water jet cutter, a welding torch and the like.

The apparatus comprises a frame including a stationary frame part 2 and a frame part 3 that rotates about a vertical shaft 4. Vertical shaft 4 is hollow and stationary, whereas a support 5 of frame part 3 is supported in bearings 6 on shaft 4. Shaft 4 includes a stationary gear 7, whilst an electric motor 8 is mounted on support 5, the driving shaft 9 of which is fitted with a pinion 10, which meshes with gear 7. Said drive mechanism provides the rotation of frame part 3, and consequently of cutting head 1, about a vertical axis.

Frame part 3 furthermore includes a vertical plate 11, which is screwed to support 5 and which functions to carry cutting head 1. A shaft 12 of a first crank 13 is mounted in bearings on vertical plate 11, as is a shaft 14 of a second crank 15. Shafts 12 and 14, which are positioned vertically above each other, extend parallel to each other, in particular at least substantially horizontally. An arm 16 is connected to both cranks 13 and 15, with cutting head 1 being mounted on the bottom end thereof by means of a horizontal pivot pin 17, which extends parallel to shafts 12 and 14. Arm 16 is connected to first crank 13 via a first connecting pin 18, and to second crank 15 via a second connecting pin 19. Cranks 13 and 15 are furthermore interconnected by means of a connecting rod 20, which is connected to first crank 13 by means of a first connecting pin 21 and to second crank 15 by means of a second connecting pin 22.

The connection between the two cranks 13 and 15 by means of arm 16 and connecting rod 20 is such that second crank 15 pivots synchronously with first crank 13. To this end the distance between the first and the second connecting pins 18, 19 is equal to the distance between the first and the second connecting pins 21, 22, whereas the connecting lines between the central axes of the various associated pins extend parallel to each other, so that cranks 13, 15, arm 16 and connecting rod 20 form a four-rod linkage, which ensures that arm 16 will extend parallel to itself at all times upon pivoting of first crank 13.

Part of the circumference of first crank 13 is in the form of a circular segment, said crank being provided externally with teeth 23, which mesh with a pinion 24 of a driving shaft 25. Said driving shaft 25 is coupled to a pulley 26, over which a toothed belt 27 is passed, which is also passed over a pinion 28 on the outgoing shaft 29 of an electric motor 30. First crank 13 is pivoted by means of said electric motor 30. First crank 13 furthermore includes a pin 31, which engages in a guide slot 32 in the form of a circular segment for the purpose of limiting the pivoting movement of first crank 13.

A toothed belt 33 or a similar endless connecting element is passed over the pivot pin 17 of cutting head 1 and over the second connecting pin 19 of arm 16, wherein the pulleys on pins 17 and 19 have the same diameter, so that rotation of pin 19 (which is fixedly mounted on second crank 15) is transmitted to pivot pin 17 in a ratio of 1 : 1. Consequently, pivoting movement of second crank 15 will result in identical pivoting movement of cutting head 1. In this manner cutting head will make a pivoting movement about an imaginary centre upon pivoting movement of first crank 13, which imaginary centre is in line with the connecting line through the central axes of shafts 12 and 14. Since the central axis of cutting head 1 is also aligned with the central axis of vertical shaft 4 in its vertical position, cutting head 1 will remain focussed at the same centre during all pivoting movements of cutting head 1, so that the angle between cutting head 1 and the object to be cut can be adjusted without the cutting point of the object being shifted.

It will be apparent from the foregoing that it is possible to achieve accurate cutter movement with the apparatus described herein. The apparatus can be designed as a robust yet compact unit, which is relatively insensitive to the heat, the sputtering and the precipitation of smoke from the cutting head if said cutting head is in the form of a torch. Most parts of frame part 3 are mounted on the side of the arm 16 with respect to vertical shaft 4, so that the frame parts hardly project beyond vertical shaft 4, as a result of which cutting head 1 can be positioned close to a chuck of a lathe or another clamping apparatus, so that cutting near the clamping apparatus is possible, as a result of which the loss of material will be small.

The invention is not restricted to the above-described embodiment as shown in the drawing, which can be varied in several ways without departing from the scope of the invention as defined by the appended claims. Thus it would be possible to use different means for connecting the cranks, for example a belt transmission or another rigid or flexible connecting element, as long as synchronous pivoting of the cranks is ensured.

## Claims

1. An apparatus for cutting an object, such as a tube or a plate, by means of a cutting means (1), comprising:
a frame (2, 3) which can be positioned with respect to said object,
a cutting means (1) which is movably connected to the frame by means of a drive mechanism (23-30), in such a manner that the cutting means is capable of pivoting movement about a pivot pin (17), wherein the cutting means is pivot-mounted on an arm (16), which is fitted with said drive mechanism and with an auxiliary guide (13-15, 17-22) for maintaining the arm (16) in a position parallel to itself during the pivoting movement of the cutting means (1), whereas the cutting menas is connected to the auxiliary guide (13-15, 17-22) via a transmission (33) for pivoting the cutting means synchronously with the movement of the arm (16), **characterized in that** said auxiliary guide (13-15, 17-22) includes two crank members (13, 15), which are both pivotally connected to the arm (16) in two spaced-apart first connecting points (18, 19), and which are interconnected by connecting means (20).

2. An apparatus according to claim 1, wherein said connecting means (20) include a coupling rod, which is connected to said crank members (13, 15) in two spaced-apart second connecting points (18, 19).

3. An apparatus according to claim 2, wherein the length of the connecting rod (20) between said second connecting points (21, 22) to said crank members (13, 15) equals the length of the arm (16) between associated first connecting points (18, 19) to the crank members.

4. An apparatus according to any one of the preceding claims, wherein the transmission (33) includes an endless transmission element, such as a belt or the like, which is passed over the pivot pin (17) of the cutting means (1) and a, preferably identical, shaft on one of the connecting points (18, 19) of the crank members (13, 15).

5. An apparatus according to any one of the preceding claims, wherein the crank member (13) remote from the cutting means has a circumference in the form of a circular segment, including teeth (23), with which a pinion (24) of a transmission (25-29) of a driving motor (30) meshes.

6. An apparatus according to claim 5, wherein said transmission (25-29) comprises a pulley (26) over which a toothed belt (27) is passed, which belt is also passed over a pulley (28) on the outgoing shaft (29) of a horizontally disposed electric motor (30).

7. An apparatus according to any one of the preceding claims, wherein the two crank members (13, 15) are bearing-mounted on a vertical plate (11) of the frame (2, 3).

8. An apparatus according to any one of the preceding claims, wherein the frame (2, 3) includes a stationary frame part (2) and a rotatable frame part (3), which is mounted on a vertical rotary shaft (4), which can be driven by means of an electric motor (8) having a vertical drive shaft (9).

9. An apparatus according to any one of the preceding claims, wherein the cutting means (1) is mounted on one side of the arm (16), whilst a clearance is present above said cutting means.

10. An apparatus according to claim 8 or 9, wherein the rotatable frame part (3) is disposed mainly on the side of the arm (16) remote from said rotary shaft (4).

## Patentansprüche

1. Vorrichtung zum Schneiden eines Gegenstands, wie eines Rohrs oder einer Platte, mittels einer Schneideinrichtung (1), umfassend:
einen Rahmen (2, 3), der in Bezug auf den Gegenstand positioniert werden kann,
eine Schneideinrichtung (1), die beweglich mit dem Rahmen mittels eines Antriebsmechanismus (23-30) derart verbunden ist, dass die Schneideinrichtung zu einer Schwenkbewegung um einen Schwenkstift (17) herum in der Lage ist, wobei die Schneideinrichtung schwenkbar an einem Arm (16) montiert ist, der mit dem Antriebsmechanismus und mit einer Hilfsführung (13-15, 17-22) zum Halten des Arms (16) in einer Position parallel zu sich selbst während der Schwenkbewegung der Schneideinrichtung (1) verbunden ist, während die Schneideinrichtung mit der Hilfsführung (13-15, 17-22) über ein Getriebe (33) zum Schwenken der Schneideinrichtung synchron zu der Bewegung des Arms (16) verbunden ist, **dadurch gekennzeichnet, dass** die Hilfsführung (13-15, 17-22) zwei Kurbelelemente (13, 15) aufweist, die beide schwenkbar mit dem Arm (16) in zwei voneinander beabstandeten, ersten Verbindungspunkten (18, 19) verbunden sind, und die miteinander durch eine Verbindungseinrichtung (20) verbunden sind.

2. Vorrichtung nach Anspruch 1, bei welcher die Verbindungseinrichtung (20) eine Kopplungasstange aufweist, die mit den Kurbelelementen (13, 15) in zwei voneinander beabstandeten, zweiten Verbindungspunkten (18, 19) verbunden ist.

3. Vorrichtung nach Anspruch 2, bei welcher die Länge der Verbindungsstange (20) zwischen den zweiten Verbindungspunkten (21, 22) mit den Kurbelelementen (13, 15) gleich der Länge des Arms (16) zwischen den ersten Verbindungspunkten (18, 19) zu den Kurbelelementen ist.

4. Vorrichtung nach einem der vorhergehenden Ansprüche, bei welcher das Getriebe (33) ein Endlosübertragungselement wie einen Riemen oder dergleichen aufweist, der über den Schwenkstift (17) der Schneideinrichtung (1) geführt ist, und eine bevorzugt identische Welle an einem der Verbindungspunkte (18, 19) der Kurbelelemente (13, 15) aufweist.

5. Vorrichtung nach einem der vorhergehenden Ansprüche, bei welcher das Kurbelelement (13), welches von der Schneideinrichtung entfernt ist, einen Umfang in der Form eines Kreissegments mit Zähnen (23) besitzt, mit denen ein Ritzel (24) eines Getriebes (25-29) eines Antriebsmotors (30) kämmt.

6. Vorrichtung nach Anspruch 5, bei welcher das Getriebe (25-29) eine Rolle (26) aufweist, über die ein Zahnriemen (27) geführt ist, welcher Riemen ebenso über eine Rolle (28) an der Abtriebswelle (29) eines horizontal vorgesehenen Elektromotors (30) geführt ist.

7. Vorrichtung nach einem der vorhergehenden Ansprüche, bei welcher die zwei Kurbelelemente (13, 15) an einer vertikalen Platte (11) des Rahmens (2, 3) über Lager montiert sind.

8. Vorrichtung nach einem der vorhergehenden Ansprüche, bei welcher der Rahmen (2, 3) einen stationären Rahmenteil (2) und einen drehbaren Rahmenteil (3), der an einer vertikalen Drehwelle (4) montiert ist, die mittels eines Elektromotors (8) angetrieben werden kann, der eine vertikale Antriebswelle (9) besitzt, umfasst.

9. Vorrichtung nach einem der vorhergehenden Ansprüche, bei welcher die Schneideinrichtung (1) an einer Seite des Arms (16) montiert ist, während ein Spalt oberhalb der Schneideinrichtung vorhanden ist.

10. Vorrichtung nach Anspruch 8 oder 9, bei welcher der drehbare Rahmenteil (3) hauptsächlich auf der Seite des Arms (16) vorgesehen ist, die von der Drehwelle (4) entfernt gelegen ist.

## Revendications

1. Appareil destiné à découper un objet, tel qu'un tube ou une plaque, grâce à un moyen de découpe (1), comprenant :
un châssis (2, 3) qui peut être positionné par rapport audit objet,
un moyen de découpe (1) qui est raccordé de façon mobile au châssis au moyen d'un mécanisme d'entraînement (23-30) d'une manière telle que le moyen de découpe est capable d'un mouvement pivotant autour d'un pivot (17), dans lequel le moyen de découpe est monté sur pivot sur un bras (16) qui est doté dudit mécanisme d'entraînement et d'un guide auxiliaire (13-15, 17-22) pour maintenir le bras (16) dans une position parallèle à lui-même pendant le mouvement pivotant du moyen de découpe (1) tandis que le moyen de découpe est raccordé au guide auxiliaire (13-15, 17-22) via une transmission (33) destinée à faire pivoter le moyen de découpe en synchronisation avec le mouvement du bras (16), **caractérisé en ce que** ledit guide auxiliaire (13-15, 17-22) comprend deux éléments manivelles (13, 15) qui sont tous deux raccordés de façon pivotante au bras (16) en deux premiers points de raccord espacés (18, 19) et qui sont raccordés entre eux par un moyen de raccord (20).

2. Appareil selon la revendication 1, dans lequel ledit moyen de raccord (20) comprend une tige de couplage qui est raccordée auxdits éléments manivelles (13, 15) en deux seconds points de raccord espacés (21, 22).

3. Appareil selon la revendication 2, dans lequel la longueur de la tige de couplage (20) entre lesdits seconds points de raccord (21, 22) et lesdits éléments manivelles (13, 15) est égale à la longueur du bras (16) entre les premiers points de raccord associés (18, 19) et les éléments manivelles.

4. Appareil selon l'une quelconque des revendications précédentes, dans lequel la transmission (33) comprend un élément de transmission sans fin tel qu'une courroie ou similaire qui est passée par-dessus le pivot (17) du moyen de découpe (1) et un arbre, de préférence identique, sur l'un des points de raccord (18, 19) des éléments manivelles (13, 15).

5. Appareil selon l'une quelconque des revendications précédentes, dans lequel l'élément manivelle (13) éloigné du moyen de découpe présente une circonférence sous la forme d'un segment circulaire, comprenant des dents (23), avec lesquelles s'engrène un pignon (24) de la transmission (25-29) d'un moteur d'entraînement (30).

6. Appareil selon la revendication 5, dans lequel ladite transmission (25-29) comprend une poulie (26) par-dessus laquelle une courroie dentée (27) est passée, laquelle courroie est également passée par-dessus une poulie (28) sur l'arbre de sortie (29) d'un moteur électrique disposé horizontalement (30).

7. Appareil selon l'une quelconque des revendications précédentes, dans lequel les deux éléments manivelles (13, 15) sont montés sur roulement sur une plaque verticale (11) du châssis (2, 3).

8. Appareil selon l'une quelconque des revendications précédentes, dans lequel le châssis (2, 3) comprend une partie de châssis fixe (2) et une partie de châssis tournante (3), qui est montée sur un arbre tournant vertical (4) qui peut être entraîné au moyen d'un moteur électrique (8) ayant un arbre d'entraînement vertical (9).

9. Appareil selon l'une quelconque des revendications précédentes, dans lequel le moyen de découpe (1) est monté sur un côté du bras (16), un espacement étant présent au-dessus dudit moyen de découpe.

10. Appareil selon la revendication 8 ou 9, dans lequel la partie de châssis tournante (3) est disposée principalement sur le côté du bras (16) éloigné dudit arbre tournant (4).
